Europäisches Patentamt

(19) European Patent Office

Office européen des brevets

(11) Publication number: **0 231 129 B1**

# EUROPEAN PATENT SPECIFICATION

(12)

(45) Date of publication of patent specification:
06.03.91 Bulletin 91/10

(21) Application number: 87300804.9

(22) Date of filing: 29.01.87

(51) Int. Cl.⁵: **B60S 1/38**, B60S 1/40

(54) **Pivot joint.**

(30) Priority: 31.01.86 GB 8602378

(43) Date of publication of application:
05.08.87 Bulletin 87/32

(45) Publication of the grant of the patent:
06.03.91 Bulletin 91/10

(84) Designated Contracting States:
BE DE ES FR IT

(56) References cited:
DE-A- 1 505 441
DE-A- 1 930 638
DE-A- 2 438 309
DE-A- 2 604 325
DE-A- 2 758 914
DE-A- 2 851 972

(56) References cited:
FR-A- 2 254 959
FR-A- 2 312 684
FR-A- 2 365 717
FR-A- 2 450 182
GB-A- 1 183 446
GB-A- 2 041 730
GB-A- 2 048 658

(73) Proprietor: TRICO FOLBERTH LIMITED
Great West Road
Brentford, Middlesex TW8 9HP (GB)

(72) Inventor: Frimley, Charles Henry
25 Redford Road
Windsor Berkshire (GB)

(74) Representative: Pedder, James Cuthbert
J.C. Pedder & Co. 38 Norbury Cross
Norbury London SW16 4JQ (GB)

## Description

This invention relates to a pivot joint which is particularly but not exclusively useful in the manufacture of windscreen wipers.

In the manufacture of windscreen wipers, a number of pivot joints are used, particularly between the arm and blade and between the various yokes and/or levers of the blade itself.

Problems exist in the manufacture of windscreen wipers due to the necesssity, very often, of pivoting metal parts together. These tend to be noisy and have a tendency to suffer from wear and corrosion. Various proposals have been made for overcoming these problems, for example, by the provision of plastics members between the metal of the joints.

One such proposal, albeit, only suitable for joints between wiper arms and blades, can be seen from French Patent Specification FR-A- 2365717. This specification shows an arrangement in wich the arm of a windscreen wiper is connected to a relatively standard windscreen wiper blade. A joint body is attached to the end of the arm and has a bifurcated end portion at one end which is adapted to receive the pivot pin of the blade between its bifurcations so as to provide a pivot. The pivot pin is situated across an aperture in the base of a channel sectioned main yoke of the blade and the joint body is prevented from leaving the aperture unintenetionally by means of a spring detent spaced from the said one end of the joint body and which engages under the edge of the aperture in the main yoke of the blade. While this works satisfactorily in practice, the construction of the joint is not entirely satisfactory from a manufacturing standpoint.

The present invention seeks to provide a new and improved pivot joint which is relatively inexpensive to manufacture and use and which overcomes or reduces some or all of the above problems.

According to a first aspect of the invention, there is provide a joint body for pivotally connecting first and second members, the second member being of channel section at least in the region of the pivot joint, comprising a joint body, including first attachment means for attaching the body to the first member of the members to be pivoted and second attachment means for attaching the body with sufficient play to the second member of the members to be pivoted to allow pivotal movement between the joint body and the second member, whereby the second attachment means comprises a portion receivable in an aperture in the base of the channel section of the second member and is provided with a spring tongue carrying a detent movable in a direction generally at right angles to the pivot axis of the pivot joint between a first, stable position in which it renders the said portion too large in a direction at right angles to the pivot axis of the pivot joint to pass through the aperture and thus retains the joint body on the second member and a second, unstable position in which the said portion of the joint body can pass through the aperture and allow the joint body to be assembled on the second member, characterised in that a recess is formed at one end of the body engageable with an edge of a second or the aperture in the base of the channel section of the second member to provide a pivot at the said edge.

According to a second aspect of the invention, there is provided a pivot joint comprising a first member, a second member provided with a channel section at lest in the region of the pivot joint and an aperture in the base of the said channel section and a joint body as described above for pivotally connecting the said first and second members.

Further embodiments of the invention are set out in the dependent claims.

The invention will now be described in greater detail, by way of exemple, with reference to the drawings, in which :

Figure 1 is a perspective view from above of a joint body of a pivot joint, in accordance with one embodiment of the invention, intended to provide a pivot between the primary and secondary yokes or levers of a windscreen wiper blade ;

Figure 2 is a perspective view from below of the joint body of figure 1 ;

Figure 3 is a longitudinal sectional view through part of a windscreen wiper blade showing a joint between the primary and secondary yokes made with the use of a joint body shown in figure 1 ;

Figure 4 is a perspective view, similar to figure 1 showing a joint body of a pivot joint, in accordance with a second embodiment of the invention, intended to provide a pivot between the arm and blade of a windscreen wiper ;

Figure 5 is a longitudinal sectional view through part of an arm and part of the main yoke of a windscreen wiper pivoted together by means of the joint body shown in figure 4, and

Figures 6 to 10 are views showing variations of arm to blade joints.

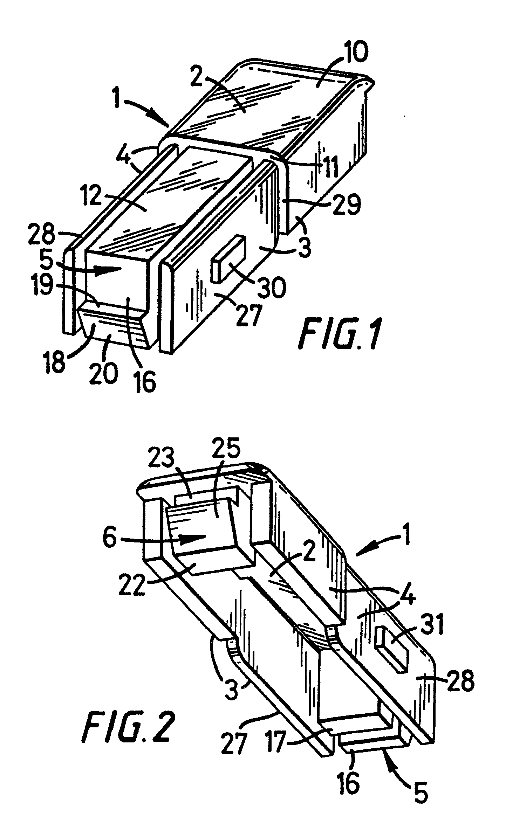

Referring firstly to figures 1 and 2, there is shown a joint body 1 comprising a plastics moulding having a base portion 2, two side portions 3 and 4 and two depending end portions 5 and 6.

The base portion 2 comprises a first main part 10 ending towards the middle of the base portion 2 in a step 11 and a second part 12, lower than the part 10 for a reason which will become clear hereafter. This part 12 is not connected to the side portions 3 and 4 and extends in the form of a tongue. At the end of the tongue is the end portion 5. It is of bifurcated construction, the outer element 16 of which is relatively thin and is therefore springable towards (and away from) the inner element 17. Towards its free end, the outer element 16 is formed with a detent 18, having an upper surface 19 which is substantially horizontal and an inclined surface 20 connecting the outer edge of the surface 19 to the free end of the element 16.

At the other end of the body is the second depending end portion 6 of solid construction, having a groove 23 at its upper end which is connected to the free end 22 of the portion 6 by an inclined surface 25.

The side portions 3 and 4 extend the length of the body and extend downwardly from the base portion 2, being joined thereto over the portion 10 thereof. The remaining parts of the side portions 3 and 4 have the form of resilient tongues 27 and 28 which extend to the form of resilient tongues 27 and 28 which extend to the end of the body 1 leaving the detent part 18 proud thereof. These tongues are connected to the remainder of the side portions 3 and 4 by means of a step or shoulder 29 which forms a continuation of the step 11 in the base portion 2. About half way along the tongues are two outwardly directed projections 30 and 31, one to each tongue, which project outwardly such that their outer ends are parallel with the thicker parts of the side portions 3 and 4. It will also be seen that the sides of the tongues 27 and 28 away from the base portion 2 extend prout of the remainder of the side portions 3 and 4.

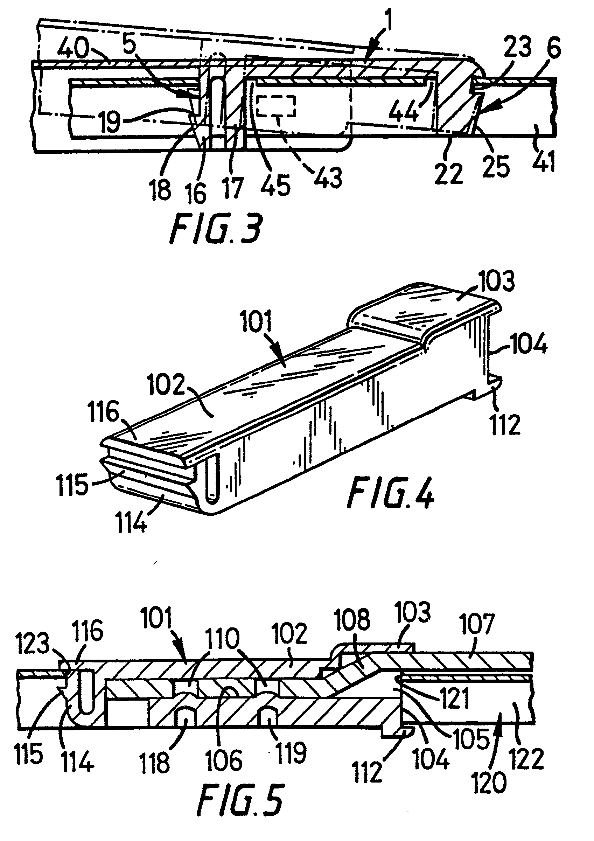

Referring now particularly to figure 3, the joint body 1 is intended to form a pivot joint between a primary yoke 40 and the secondary yoke 41 (both seen only in part) of a windscreen wiper blade. As can be seen, both the primary and secondary yokes are of inverted "U" section. The primary yoke 40 ends in a straight cut off and is formed with apertures in its side walls, one of which is shown at 43. The secondary yoke 41 is merely provided with two apertures 44 and 45 in its base portion.

In order to assemble the joint, the body 1 is first assembled to the end of the primary yoke 40. To this end, the tongues 27 and 28 are urged towards each other and the body 1 is inserted, tongue end first, into the end of the yoke 40.

As will be clear from figure 3, the body 1 is pushed in until the soulder or step 11 engages the end of the yoke 40, at which time the projections 30 and 31 will become aligned with the apertures 43. The tongues 27 and 28 will then spring out, seating the projections 30 and 31 in the apertures 43, thus securing the body 1 to the yoke.

Next the secondary yoke 41 will be offered up with the right hand edge of the aperture 44 aligned with the right hand end of the body. This will align both depending end portions 5 and 6 with the respective aperture 45 and 44. Because of the inclined surfaces 20 and 25, the body 1 can be pushed onto the yoke 41, the element 16 of the end portion 5 being flexed inwards automatically to enable the detent 18 to pass through the aperture 45. Once this has happened, the body 1 is locked in place but has a certain freedom of movement between the position shown in full lines and the position shown in chain lines. The amount of pivotal movement allowed here is normally sufficient for normal flexing of the windscreen wiper blade.

While it is possible to disassemble the joint due to the resilience of the element 16 of the end portion 5, this is by no means necessary in this embodiment. Therefore the element 16 can be made only sufficiently resilient as to enable the detent 18 to be forced through the aperture.

In a second embodiment of the invention, the pivot joint is intended for use as a connector for connecting a windscreen wiper arm to a windscreen wiper blade. This embodiment can be seen in figures 4 and 5.

Figure 4 shows a perspective view of the joint body 101 used in the form of a connector. The body 101, which is a plastics moulding, comprises a main part 102 having a raised portion 103 at one end 104. The body is hollowed out from this end 104, providing a wide mouth 105 and a bore or passage 106 (Figure 5) for receiving the end of the arm 107 of the wiper. It will be noted that this arm has an unusual termination, having a cranked end 108 and two apertures 110 for a purpose to be described. Below the mouth 105 is a projection 112 extending to the right.

The left hand end of the body 101 is provided with a resilient tongue 114 which extends upwards from the bottom of the body 101 and is provided with a detent 115. The free end of the tongue 114 is located beneath a rearwardly extending extension 116 of the top 102 of the body 101.

In considering assembly of this pivot joint, it is to be remembered that while it is necessary to detach the blade from the arm, it is unnecessary to remove the connector from the arm. The initial operation is to assemble the connector 101 on the arm 107.

Referring particularly to figure 5, prior to the assembly, two indents 118 and 119 which are shown have not yet been formed. The cranked end 108 of the arm 107 is inserted into the mouth 105 so that it extends down the passage 106 and engages the end of the passage. This locates the arm relative to the body 101. At this point, the two indents 118 and 119 are punched into the body 101, providing a half shear of the material of the body 101, at those positions. In so doing, the material of the body 101 is pushed into the apertures 102 in the end of the arm 107, thus securing the arm against removal from the passage 106.

To assemble the blade 120 on to the arm 107, the left hand end of the body 101 is inserted into an aperture 121 formed in the primary yoke 122 of the blade. It is to be understood that this aperture 121 may be the aperture often provided in the primary yoke for arm attachment, the only significant difference in the present case in that the pivot pin, normally used in the attachment, is missing.

The end edge 123 of the aperture 121 is pushed against the tongue 114 to flex it to the right, thereby reducing the length taken up by the body 101 and thus enabling the right hand end 104 of the body 101 to be inserted int the aperture 121 in its turn. The blade 120 is then released, allowing the tongue 114 to spring out again and provide locking of the body 101 in the blade 120.

It will be seen that the arm can pivot substantially about the vicinity of the left hand end of the body 101, the pivotal movement being limited in a first direction by engagement of the exterior of the primary yoke 122 by the arm 107 and in a second direction by engagement of the upper surface of the projection 112 on the underside of the base of the channel of the yoke 122.

To remove the blade 120 from the arm 107, all that is required is to push the blade longitudinally towards the arm 107. This moves the resilient tongue 114 to the right and allows the right hand end 104 of the body 101 to be removed from the aperture 121 in the yoke 122. Once the end 104 has cleared the aperture 121, the left hand end of the body 101 can readily be removed therefrom.

It will be appreciated that with this form of construction, the arm/blade profile at the connection point is low and thus provides for efficient operation and a pleasing appearance.

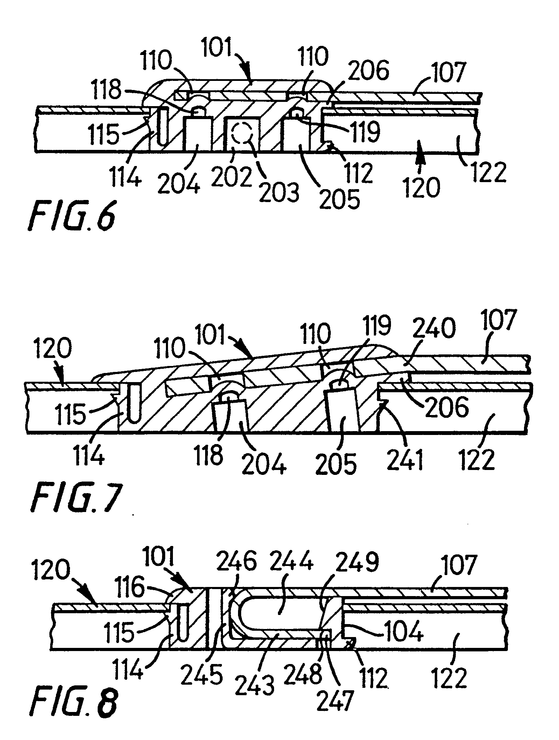

Figures 6 to 10 show variations of the form of joint body or connector which may be used. Figure 6 shows an arrangement very similar to that shown in figures 4 and 5. In this case however, the arm 107 is not cranked providing a higher profile of the body 101. Additionally, the bottom of the body 101 has a recess 202 through which the normal pivot pin (shown in broken lines at 203) can pass without any contact. This enables the use of the invention where a primary yoke with a pivot pin is required, for example for strength. Additionally, two locating bores 204 and 205 are provided, the half shears 118 and 119 being formed at the bottom of these bores. It will also be noted that one of the limits of the pivotal motion is provided by a lip 206 instead of the arm 107 itself.

Figure 7 shows a similar arrangement to figure 6 but in this case there is a bend 240 in the arm 107 instead of the crank formation. Since the same fixing methods are used, it is necessary to provide inclined bores 204 and 205. The cut out for use with blades having pivot pins is also omitted. Also because of the bent nature of the arm 107, the extention 112 is replaced by a detent 241, spaced from the lower edge of the body 101.

Figure 8 shows an arrangement which makes it possible to use the invention with an arm 107 having a standart hook termination 243. To this end, the body 101, which is externally substantially the same as the body shown in figures 4 and 5, is provided with a recess 244 to receive the hook. This recess 244 is defined at one side by an "L" shaped resilient tongue 245 which has a projection 246 shaped to the curvature of the hook 243. The end 247 of the hook 243 seats in a groove 248 provided in the interior of the end 104 of the body 101. The interior surface 249 is inclined to assist insertion of the hook 243. To insert the hook 243 into the body 101, the curved portion of the hook 243 is pressed against the resilient tongue 245 which flexes to the left and enable the end 247 of the hook 243 to be pushed down the inclined surface 249 and into the groove 248. The arm 107 can be detached by flexing of the tongue 245 to enable the end 247 of the hook 243 to be extracted from the groove 248.

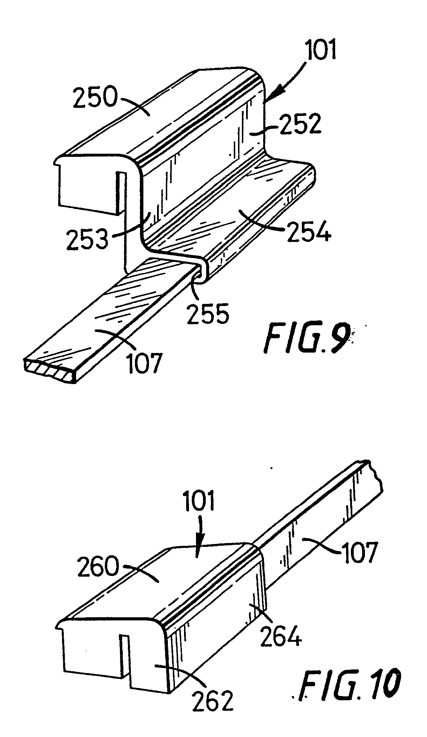

Figures 9 and 10 are perspective views of an arm 107 and a form of joint body or connector to provide a side by side relationship between the arm and blade. In both embodiments, the main part of the body 101 is the same as in previous embodiments and thus the body is shown only diagrammatically. The attachment part of the body 101 for attachment of the arm 107 is separated from the main part.

Thus in figure 9, the arm 107 is in its usual horizontal orientation. The main part 250 of the body 101 is provided with an "S" shaped extension 252 which passes over the top of one side of the primary yoke of the blade (not shown), downwardly at right angles thereto (shown at 253) and ends in a horizontal portion 254 provided with a passage 255 for receiving the arm 107. The arm may be retained in this passage in a similar way to the way used in the previous embodiments.

Figure 10 shows an arrangement of the body 101 for attachment to a vertically orientated arm 107. In this case the main part 260 of the body 101 is provided with an "L" shaped extention 262 which again passes over the top of one side of the primary yoke of the blade (not shown) and then downwardly at right angles thereto, the downward part forming an arm attachment portion 264. To this end it is provided with the usual arm receiving passage (not shown). The arm may be fixed in this passage in a similar way to previous embodiments.

In the embodiment of figures 1 to 3, if desired, the resilient element 16 may be provided at both ends or at either end of the body 1. The inner element 17 may be omitted if the body 1 is made of a material of sufficient strength. The two apertures 44 and 45 in the secondary yoke could be replaced by a single larger aperture, in which case, the element 17 and the end 6 could be joined together to provide a single solid piece. The shape of the projections 30 and 31 and the apertures 43 could be varied. They could be circular, square or other regular polygonal form. Two sets of projections and apertures could be provided for increased security instead of the single set shown.

In the embodiments of figures 4 to 7, the number of apertures in the arm 107 could be varied, either by reducing the number to one or increasing the number, most suitably to three. Other forms of attachment may be used such as would be required by bayonet type terminations, the body of the connector being suitably constructed and provided, for example, with a spring retaining clip. Where the arm receiving passage is of tapered form to assist moulding, the arm could be provided with widenings, suitably by providing half shears along the edges of the arm. The resilient element provided for attachment to the primary yoke may be provided at either or both ends.

It is also to be understood that while the invention has been described as a pivot joint for use in the construction of windscreen wipers, it is not limited to this application and may be used in suitable applications in other fields.

## Claims

1. A joint body for pivotally connecting first (40, 107) and second (41, 120) members, the second member (40, 120) being of channel section at least in the region of the pivot joint comprising a joint body (1, 101) including first attachment means (30, 118, 119) for attaching the body (1, 101) to the first member (40, 107) of the members to be pivoted and second attachment means (5, 102, 114) for attaching the body (1, 101) with sufficient play to the second member (41, 120) of the members to be pivoted to allow pivotal movement between the joint body (1, 101) and the second member (41, 122), whereby the second attachment means (5, 102, 114) comprises a portion (5, 102) receivable in an aperture (45, 121) in the base of the channel section of the second member (41, 120) and is provided with a spring tongue (16, 114) carrying a detent (16, 115) movable in a direction generally at right angles to the pivot axis of the pivot joint between a first, stable position in which it renders the said portion (5, 102) too large in a direction at right angles to the pivot axis of the pivot joint to pass through the aperture (45, 121) and thus retains the joint body (1, 101) on the second member (41, 120) and a second, unstable position in which the said portion (5) of the joint body (1, 101) can pass through the aperture (45, 121) and allow the joint body to be assembled on the second member (41, 120), characterised in that a recess (23, 115, 116) is formed at one end of the body (1, 101) engageable with an edge of a second on the aperture (44, 121) in the base of the channel section of the second member (41, 120) to provide a pivot at the said edge.

2. A pivot joint comprising a first member, a second member provided with a channel section at least in the region of the pivot joint and an aperture in the base of the said channel section and a joint body (1, 101) as claimed in claim 1 for pivotally connecting the said first and second members.

3. A pivot joint as claimed in claim 1 or 2, wherein the recess (23) is provided at the opposite end of the body (1) to the sprung detent means.

4. A pivot joint as claimed in claim 1 or 2, characterised in that the recess (115, 116) comprises a space between an extention (116) formed on the joint body (101) and extending parallel to the detent (115) and the detent (115).

5. A pivot joint as claimed in any one of claim 1 to 4, characterised in that the detent (18, 115) has an inclined surface (20) which is engageable by the mouth of the aperture (45, 121) to move it from its first position to its second position when the portion (5, 114) is pusched into the aperture (45, 121) in the second member (41, 120).

6. A pivot joint as claimed in any one of claims 1 to 5, characterised in that the first member (40, 107) is permanently attached to the joint body (1, 101).

7. A pivot joint as claimed in claim 6, characterised in that the joint body (101) has a passage (106) in which an end of the first member (107) sits, the end of the first member (107) being provided with at least one through aperture (110) and the joint body (101) being secured to the first member (107) by means of at least one half shear (118, 119) which forces material of the joint body (101) into the at least one through aperture (110) in the first member (107).

8. A pivot joint as claimed in claim 7, characterised in that two through apertures (110) are provided in the first member (107) which cooperate with two half shears (118, 119) in the joint body (101).

9. A pivot joint as claimed in any one of claim 1 to 5, characterised in that the first member (40) is detachably connected to the joint body (1).

10. A pivot joint as claimed in claim 9, characterised in that the first member (40) is of channel shaped cross-section and the joint body (1) sits inside the channel, the joint body (1) having a pair of transversely extending sprung projections (30,31) engageable with corresponding apertures (43) in the side walls of the channel.

11. A pivot joint as claimed in any one of claims 1 to 10, characterised in that the joint body (1, 101) has stop means (19, 112, 241) engageable with an edge of the mouth of the aperture (45, 121) in the second member (41, 120) for limiting the pivotal movement of the joint.

12. A pivot joint as claimed in any one of claims 1 to 11, characterised in that the first member (107) is the termination of the arm of a windscreen wiper and the second member (122) is the main yoke of a windscreen wiper blade.

13. A pivot joint as claimed in any one of claim 1 to 11, characterised in that the first member (40) is the main yoke or lever of a windscren wiper blade and the second member (41) is a secondary yoke or lever of the windscreen wiper blade.

## Ansprüche

1. Verbindungskörper zur drehbaren Verbindung eines ersten (40, 107) und eines zweiten (41, 120) Teiles, wobei das zweite Teil (40, 120) zumindest im Bereich der Schwenkverbindung einen Kanalquerschnitt hat, der einen Verbindungskörper (1, 101) umfaßt, der eine erste Befestigungseinrichtung (30, 118, 119) zur Befestigung des Körpers (1, 101) an das erste Teil (40, 107) der zu drehenden Teile und eine zweite Befestigungseinrichtung (5, 102, 114) zur Befestigung des Körpers (1, 101) mit ausreichendem Spiel an das zweite Teil (41, 120) der zu drehenden Teile umfaßt, um eine Drehbewegung zwischen dem Verbindungskörper (1, 101) und dem zweiten Teil (41, 122) zu gestatten, wobei die zweite Befestigungseinrichtung (5, 102, 114) einen Abschnitt (5, 102) umfaßt, der in der Öffnung (45, 121) im Grundteil des Kanalquerschnittes des zweiten Teils (41, 120) aufnehmbar und mit einer Federzunge (16, 114) versehen ist, die eine Arretiervorrichtung (16, 115) trägt, die in einer im allgemeinen rechtwinkligen Richtung zur Drehachse der Drehverbindung zwischen der ersten stabilen Position, in der sie diesen Abschnitt (5, 102) in der rechtwinkligen Richtung zur Drehachse der Drehverbindung zu groß macht, um durch die Öffnung (45, 121) hindurchzugehen und somit den Verbindungskörper (1, 102) auf dem zweiten Teil (41, 120) hält, und einer zweiten instabilen Position beweglich ist, in der der Abschnitt (5) des Verbindungskörpers (1, 101) durch diese Öffnung (45, 121) hindurchgehen kann, und der Verbindungskörper auf dem zweiten Teil (41, 120) aufgebracht werden kann, dadurch gekennzeichnet, daß die Vertiefung (23, 115, 116) auf einer Seite des Körpers (1, 101) ausgebildet ist, die in eine Kante des zweiten oder in die Öffnung (44, 121) in der Unterseite des Kanalquerschnitts des zweiten Teils (41, 120) eingreifen kann, um an dieser Kante einen Schwenkpunkt zu schaffen.

2. Drehbare Verbindung, die ein erstes Teil, ein zweites Teil mit einem Kanalquerschnitt zumindest im Bereich der Drehverbindung und einer Öffnung in der Unterseite des Kanalquerschnitts und einen Verbindungskörper (1, 101) nach Anspruch 1 umfaßt, um das erste und das zweite Teil schwenkbar zu verbinden.

3. Drehbare Verbindung nach Anspruch 1 oder 2, worin die Vertiefung (23) an der zur gefederten Arretiervorrichtung entgegengesetzten Seite des Körpers (1) vorgesehen ist.

4. Drehbare Verbindung nach Anspruch 1 oder 2, dadurch gekennzeichnet, daß die Vertiefung (115, 116) zwischen der Verlängerung (116), die auf dem Verbindungskörper (101) ausgebildet ist und sich parallel zur Arretiervorrichtung (115) erstreckt, und der Arretiervorrichtung (115) einen Raum umfaßt.

5. Drehbare Verbindung nach einem der Ansprüche 1 bis 4, dadurch gekennzeichnet, daß die Arretiervorrichtung (18, 115) eine geneigte Oberfläche (20) aufweist, die durch das Loch der Öffnung (45, 121) eingreifen kann, um sie von ihrer ersten Position in ihre zweite Position zu verschieben, wenn der Abschnitt (5, 114) in die Öffnung (45, 121) im zweiten Teil (41, 120) gedrückt wird.

6. Drehbare Verbindung nach einem der Ansprüche 1 bis 5, dadurch gekennzeichnet, daß das erste Teil (40, 107) dauerhaft an den Verbindungskörper (1, 101) angebracht ist.

7. Drehbare Verbindung nach Anspruch 6, dadurch gekennzeichnet, daß der Verbindungskörper (101) einen Durchgang (106) aufweist, in dem ein Ende des ersten Teils (107) sitzt, wobei das Ende des ersten Teils (107) mit mindestens einer Durchgangsöffnung (110) versehen ist, und der Verbindungskörper (101) durch mindestens eine halbe Kerbe bzw. Scherung (118, 119) an das erste Teil (107) verbunden ist, die das Material des Verbindungskörpers (101) in die zumindest eine Durchgangsöffnung (110) des ersten Teils (107) drückt.

8. Drehbare Verbindung nach Anspruch 7, dadurch gekennzeichnet, daß die beiden Durchgangsöffnungen (110) im ersten Teil (107) vorgesehen sind, die mit den beiden halben Kerben bzw. Scherungen (118, 119) im Verbindungskörper (101) in Wechselwirkung stehen.

9. Drehbare Verbindung nach einem der Ansprüche 1 bis 5, dadurch gekennzeichnet, daß das erste Teil (40) lösbar mit der Schwenkverbindung (1) verbunden ist.

10. Drehbare Verbindung nach Anspruch 9, dadurch gekennzeichnet, daß das erste Teil (40) einen kanalförmigen Querschnitt aufweist, und der Verbindungskörper (1) innerhalb des Kanales sitzt, wobei der Verbindungskörper (1) ein paar sich quer erstreckender gefederter Vorsprünge (30, 31) aufweist, die in die entsprechenden Öffnungen (43) in den Seitenwänden des Kanales eingreifen können.

11. Drehbare Verbindung nach einem der Ansprüche 1 bis 10, dadurch gekennzeichnet, daß der Verbindungskörper (1, 101) eine Stopeinrichtung (19, 112, 241) aufweist, die in die Kante des Loches der Öffnung (45, 121) im zweiten Teil (41, 120) eingreifen kann, um die Schwenkbewegung der Verbindung zu begrenzen.

12. Drehbare Verbindung nach einem der Ansprüche 1 bis 11, dadurch gekennzeichnet, daß das erste Teil (107) das Ende des Armes eines Scheibenwischers und das zweite Teil (122) der Hauptarm bzw. -bügel eines Scheibenwischerblattes ist.

13. Drehbare Verbindung nach einem der Ansprüche 1 bis 11, dadurch gekennzeichnet, daß das erste Teil (40) der Hauptarm bzw. -bügel oder Hebel des Scheibenwischerblattes und das zweite Teil (41) der zweite Arm bzw. Bügel oder Hebel des Scheibenwischerblattes ist.

## Revendications

1. Corps de joint destiné à relier de façon pivotante des premier (40, 107) et second éléments (41, 120), le second élément (40, 120) étant un profilé en U au moins dans la région du joint pivotant ou rotatif, constitué par un corps de joint (1, 101) comprenant des premiers moyens de fixation (30, 118, 119) destinés à fixer le corps (1, 101) sur le premier élément (40, 107) des éléments à faire pivoter, et des seconds moyens de fixation (5, 102, 114) destinés à fixer le corps (1, 101) avec un jeu suffisant sur le second élément (41, 120) des éléments à faire pivoter pour permettre un mouvement pivotant entre le corps de joint (1, 101) et le second élément (41, 122), le second moyen de fixation (5, 102, 114) comprenant une portion (5, 102) pouvant être logée dans une ouverture (45, 121) dans la base du profilé en U du second élément (41, 120) et étant muni d'une languette élastique (16, 114) comportant un cran d'arrêt (16, 115) mobile dans une direction généralement à angles droits par rapport à l'axe pivotant du joint tournant entre une première position stable dans laquelle elle rend la portion (5, 102) trop grande dans une direction à angles droits par rapport à l'axe de pivotement du joint tournant pour traverser l'ouverture (45, 121) et retient ainsi le corps de joint (1, 101) sur le second élément (41, 120), et une seconde position instable dans laquelle la portion (5) du corps de joint (1, 101) peut traverser l'ouverture (45, 121) et permet ainsi de monter le corps de joint sur le second élément (41, 120), caractérisé en ce qu'un évidement (23, 115, 116) est formé sur une extrémité du corps (1, 101) pouvant coopérer avec un bord d'une seconde extrémité ou avec l'ouverture (44, 121) dans la base du profilé en U du second élément (41, 120) pour fournir un pivot sur ce bord.

2. Joint rotatif comprenant un premier élément, un second élément profilé en U au moins dans la région du joint rotatif et une ouverture dans la base du profilé en U et un corps de joint (1, 101) selon la revendication 1 pour relier par pivotement les premier et second éléments.

3. Joint rotatif selon la revendication 1 ou 2, dans lequel l'évidement (23) est prévu sur l'extrémité opposée du corps (1) par rapport au cran d'arrêt sollicité élastiquement.

4. Joint tournant selon la revendication 1 ou 2, caractérisé en ce que l'évidement (115, 116) est constitué par un espace entre un prolongement (116) formé sur le corps de joint (101) et s'étendant parallèlement au cran d'arrêt (115) et par le cran d'arrêt (115).

5. Joint rotatif selon l'une quelconque des revendications 1 à 4, caractérisé en ce que le cran d'arrêt (18, 115) présente une surface inclinée (20) pouvant coopérer avec l'embouchure de l'ouverture (45, 121) pour la déplacer de sa première position sur sa seconde position lorsque la portion (5, 114) est introduite par poussée dans l'ouverture (45, 121) du second élément (41, 120).

6. Joint rotatif selon l'une quelconque des revendications 1 à 5, caractérisé en ce que le premier élément (40, 107) est fixé en permanence sur le corps du joint (1, 101).

7. Joint rotatif selon la revendication (6), caractérisé en ce que le corps du joint (101) présente un passage (106) dans lequel est logée une extrémité du premier élément (107), l'extrémité des premiers éléments (107) étant munie d'au moins une ouverture traversante (110) et le corps du joint (101) étant fixé sur le premier élément (107) au moyen d'au moins une demi-cisaille (118, 119) qui force la matière du corps du joint (101) dans au moins une ouverture traversante (110) du premier élément (107).

8. Joint rotatif selon la revendication (7), caractérisé en ce que deux ouvertures traversantes (110) sont prévues dans le premier élément (107) qui coopère avec deux demi-cisailles (118, 119) dans le corps du joint (101).

9. Joint rotatif selon l'une quelconque des revendications 1 à 5, caractérisé en ce que le premier élément (40) est fixé de façon amovible sur le corps du joint (1).

10. Joint rotatif selon la revendication (9), caractérisé en ce que le premier élément (40) présente une section transversale en forme de U et le corps du joint (1) est logé à l'intérieur du profilé en forme de U, le corps du joint (1) présentant une paire de saillies sollicitées élastiquement et s'étendant transversalement (30, 31) pouvant coopérer avec des ouvertures correspondantes (43) dans les parois latérales du profilé en U.

11. Joint rotatif selon l'une quelconque des revendications 1 à 10, caractérisé en ce que le corps du joint (1, 101) présente des butées (19, 112, 241) pouvant coopérer avec un bord de l'embouchure de l'ouverture (45, 121) du second élément (41, 120) pour limiter le mouvement pivotant du joint.

12. Joint rotatif selon l'une quelconque des revendications 1 à 11, caractérisé en ce que le premier élément (107) constitue la terminaison du bras d'un essuie-glace et le second élément (122) est l'étrier principal d'un balai d'essuie-glace.

13. Joint rotatif selon l'une quelconque des revendications 1 à 11, caractérisé en ce que le premier élément (40) est l'étrier principal ou levier d'un balai d'essuie-glace et le second élément est un étrier ou levier secondaire du balai d'essuie-glace.

FIG.1

FIG.2

FIG.3

FIG.4

FIG.5

**FIG.6**

**FIG.7**

**FIG.8**

250  101
252
253  254
255
107

**FIG.9**

101
260  107
264
262

**FIG.10**